# EUROPÄISCHE PATENTANMELDUNG

(11) **EP 3 446 603 A1**
(43) Veröffentlichungstag der Anmeldung: **27.02.2019**
(21) Anmeldenummer: 17187371.4
(22) Anmeldetag: 22.08.2017
(51) Int. Cl.: A47J 37/07

(54) **MOBILER KOHLEGRILL**

(71) Anmelder: Forbrig, Siegfried Fabian, 23746 Kellenhusen (DE)
(72) Erfinder: Forbrig, Siegfried Fabian, 23746 Kellenhusen (DE)
(74) Vertreter: Limbeck, Achim

(57) **Zusammenfassung**

Die vorliegende Erfindung betrifft ein mobiler Kohlegrill (1), der ein Grillgehäuse mit mindestens zwei reversibel zusammenfügbaren Gehäuseteilen (10, 11) umfasst, welche sich zumindest aus einer Glutkammer (10) und mindestens einem Luftschacht (11) zusammensetzen, wobei mindestens ein am oder oberhalb der Glutkammer (10) anordbarer Grillrost (13) sowie eine innerhalb der Glutkammer (10) anordbare Aufnahme (14) für Grillkohle vorgesehen sind. Der erfindungsgemäße Kohlegrill 1 ist dadurch gekennzeichnet, dass die mindestens zwei Gehäuseteile (10, 11) aus form- und/oder kraftschlüssig sowie reversibel zusammenfügbaren Seitenwänden (100', 100", 100"', 100""; 110', 110", 110''', 110"") gebildet sind, wobei die Seitenwände (100', 100", 100'", 100"") und die Seitenwände (110', 110", 110''', 110"") an ihren jeweiligen Seitenkanten (1000) und (1100) derart angelenkt und/oder reversibel aneinander angebracht sind, dass sie aus einer Stellung als Seitenwandsegment auf die jeweils angrenzende Seitenwand (100', 100", 100'", 100"") und (110', 110", 110''', 110"") klappbar oder legbar und die Gehäuseteile (10, 11) somit zusammenklappbar oder zusammenlegbar sind, so dass sie jeweils eine kompakte Einheit für eine Lagerstellung und/oder einen Transport ergeben.

## Beschreibung

### Technisches Gebiet

Die vorliegende Erfindung betrifft einen mobilen Kohlegrill, umfassend ein Grillgehäuse mit mindestens zwei reversibel zusammenfügbaren Gehäuseteilen, welche sich zumindest aus einer Glutkammer und mindestens einem Luftschacht zusammensetzen und mindestens ein am oder oberhalb der Glutkammer anordbarer Grillrost sowie eine innerhalb der Glutkammer anordbare Aufnahme für Grillkohle vorgesehen sind.

### Stand der Technik

Es sind aus dem Stand der Technik bereits zusammenleg- oder klappbare Faltgrills als Einmal- oder Mehrweggrills mit relativ geringen Gebrauchseigenschaften bekannt. Ihre Glutentstehungszeiten sind sehr lang, die Glut entwickelt sich einseitig. Das Grillen zieht sich enorm in die Länge. Bei Windstille ist das Grillen so gut wie unmöglich. Aufgrund ihrer Konstruktion und Materialbeschaffenheit verbiegen und verziehen sich diese Grills, was ihre Lebensdauer sehr begrenzt. Sie haben eine relativ hohe Rauchentwicklung und übertragen die Hitze der Glut auf den Untergrund, was das Grillen nicht überall ermöglicht.

Bekannte Klappgrills weisen darüber hinaus den Nachteil auf, dass bei ihnen aufgrund einer unkontrollierten Windzufuhr eine lange und ungleichmäßige Glutentwicklung zu verzeichnen ist und das Grillen bei Windstille nahezu unmöglich ist, zumal das Grillen darüber hinaus insgesamt viel zu lange dauert und die Grillware ungleichmäßig brät.

Die aus dem Stand der Technik teils zusammenleg- oder klappbaren Tisch- und Campinggrills weisen in den Ausführungen als einmal- oder wieder verwendbare kleinere Klapp-, Falt-, Schalen- oder Kugelgrills kein Aufwindprinzip und keine Zuluftregulierung auf und sind somit auch mit relativ langen Glutentstehungs- und Grillzeiten verbunden.

Weitere Nachteile der bekannten zusammenleg- oder klappbaren Kohlegrills sind darin zu sehen, dass diese Geräte konstruktionsbedingt umständlich in ihrer Handhabung sind, sowohl was das bequeme Verstauen als auch das einfache Zusammenbauen betrifft. Kleine Packmaße sind so gut wie nicht vorhanden. Des Weiteren stehen bekannte zusammenleg- oder klappbaren Kohlgrills in der Regel sehr wackelig.

### Darstellung der Erfindung

Der vorliegenden Erfindung liegt die Aufgabe zu Grunde, einen mobilen und zusammenleg- oder klappbaren Kohlegrill zu schaffen, welcher die vorgenannten Probleme ausräumt, der einfach in seiner Handhabung und Aufbau, der unabhängig von der Wetterlage gute Grillergebnisse liefert, standfest ist und im zusammengelegten oder zusammengeklappten Zustand bequem und Platz sparend zu verstauen und zu transportieren ist.

Erfindungsgemäß wird die voranstehende Aufgabe gemäß dem Oberbegriff des Anspruchs 1 in Verbindung mit den kennzeichnenden Merkmalen gelöst. Vorteilhafte Ausgestaltungen und Weiterbildungen des erfindungsgemäßen Kohlegrills sind in den abhängigen Unteransprüchen angegeben.

Erfindungsgemäß ist ein mobiler Kohlegrill der eingangs genannten Art dadurch gekennzeichnet, dass die mindestens zwei Gehäuseteile aus form- und/oder kraftschlüssig sowie reversibel zusammenfügbaren Seitenwänden gebildet sind, wobei die Seitenwände und die Seitenwände an ihren jeweiligen Seitenkanten und derart angelenkt und/oder reversibel aneinander angebracht sind, dass sie aus einer Stellung als Seitenwandsegment auf die jeweils angrenzende Seitenwand klappbar oder legbar und die Gehäuseteile somit zusammenklappbar oder zusammenlegbar sind, so dass sie jeweils eine kompakte Einheit für eine Lagerstellung und/oder einen Transport ergeben.

Die besondere Konstruktion des erfindungsgemäßen Kohlegrills erlaubt es dem Anwender, diesen auf einfache und bequeme Art und Weise zusammenzubauen sowie diesen nach seinem Gebrauch wieder bequem zusammen zu legen. Die durch das Zusammenklappen der Seitenwände bewirkte geringe Bauhöhe des zusammengeklappten Kohlegrills erlaubt es, diesen bspw. in einem Rucksack, einer Fahrradgepäcktasche, einer Umhänge- oder Tragetasche Platz sparend zu transportieren.

Nachdem ein bevorzugt vorgesehener Grundträger (Grundplatte mit Ascheauffang) aufgestellt ist, werden die Seitenwände des Luftschachts (Aufwindschacht) aufgeklappt und in die Außenwandung des Grundträgers geführt. Sodann werden die Seitenwände der Glutkammer aufgeklappt und auf den Luftschacht gestellt. Im letzten Schritt sind Kohlegitter in die Glutkammer und der Grillrost oben aufzubringen. Der gesamte Vorgang benötigt lediglich wenige Sekunden.

Die konstruktive Anordnung der Gehäuseteile gewährleistet, dass die gewünschte Grilltemperatur durch schnelle und gleichmäßige Glutentwicklung (beste Zuluftzirkulations- und Verwirbelungswerte) rasch erreicht wird, so dass ein schnelles Grillen - auch bei Windstille (Aufwindprinzip) möglich ist. Dies bedingt weiterhin sehr kurze Gar- und Grillzeiten (Bratwürste, Steaks in Rekordzeit 12 - 15 Minuten) und einen geringen Kohleverbrauch.

Dadurch, dass der erfindungsgemäße Kohlegrill vorzugsweise aus relativ dünnen Seitenwänden gebildet ist, ermöglicht dies ein schnelles Abkühlen nach Gebrauch.

### Kurzbeschreibung der Zeichnungen

Weitere Ziele, Merkmale, Vorteile und Anwendungsmöglichkeiten des erfindungsgemäßen Kohlegrills ergeben sich aus der nachfolgenden Beschreibung eines Ausführungsbeispiels anhand der Zeichnung. Dabei bilden alle beschriebenen und/oder bildlich dargestellten Merkmale für sich oder in beliebiger Kombination den Gegenstand der Erfindung, unabhängig von der Zusammenfassung in einzelnen Ansprüchen oder deren Rückbeziehung.

In den Zeichnungen zeigen
Fig. 1 den erfindungsgemäßen Kohlegrill in einer seitlichen Explosionsansicht;

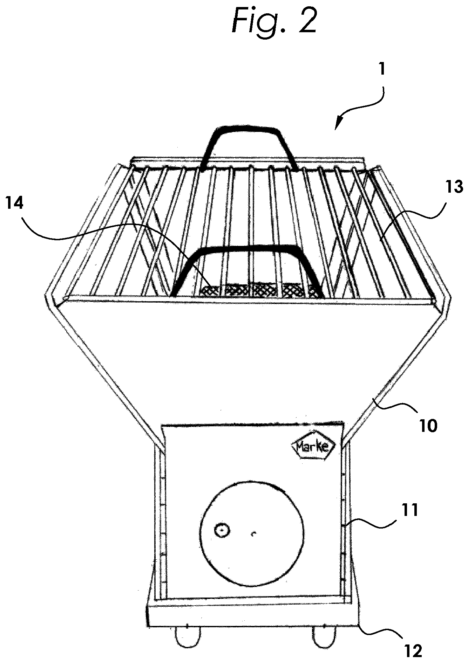

Fig. 2 den Kohlegrill in der Seitenansicht, zusammengebaut;
Fig. 3 den Kohlegrill in der Draufsicht, zusammengeklappt in einem Transportbehältnis.

### Ausführung der Erfindung

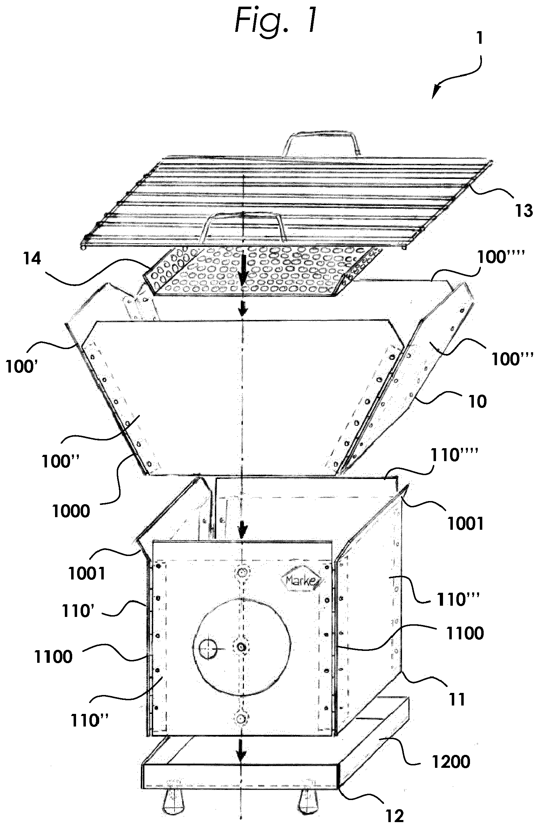

Wie aus Fig.1 ersichtlich, umfasst der erfindungsgemäße Kohlegrill ein Grillgehäuse mit vorzugsweise drei reversibel zusammenfügbaren Gehäuseteilen 10, 11, 12, welche sich aus einer Glutkammer 10, einem Luftschacht 11 sowie einem Grundträger 12 zusammensetzen. Oberhalb der Glutkammer 10 ist ein Grillrost 13 sowie innerhalb der Glutkammer 10 eine Aufnahme 14 für Grillkohle vorgesehen.

Die beiden Gehäuseteile 10, 11 bestehen jeweils aus vorteilhafterweise vier form- und/oder kraftschlüssig sowie reversibel zusammenfügbaren Seitenwänden 100', 100'', 100''', 100''''; 110', 110'', 110''', 110'''', wobei mindestens ein Gehäuseteil 10, 11 - vorzugsweise der Luftschacht 11 - als Kubus ausgebildet ist und mindestens ein Gehäuseteil 10, 11 - vorzugsweise die Glutkammer 10 eine trichterförmige Geometrie aufweist.

Die Seitenwände 100', 100'', 100''', 100'''' und die Seitenwände 110', 110'', 110'', 110'''' sind in dem in Fig. 1 dargestellten Ausführung an ihren jeweiligen Seitenkanten 1000 und 1100 jeweils angelenkt, in der Weise, dass bspw. eine Seitenwand 100' aus einer Stellung als Seitenwandsegment auf die jeweils angrenzende Seitenwand 100" klappbar oder legbar ist.

Die Seitenwände 110', 110", 110''', 110'''' sind in einer besonders vorteilhaften Ausführungsform der Erfindung in ihrem oberen Bereich 1001 zur einsteckbaren Aufnahme der Seitenwände 100', 100", 100''', 100'''' ausgebildet.

Hierzu sind die Seitenwände 110', 110", 110''', 110'''' vorzugsweise zumindest in ihrem oberen Bereich 1001 zur Bildung einer trichterförmigen Aufnahme der Seitenwände 100', 100", 100''', 100"" abgewinkelt.

Wie bereits eingangs beschrieben, ist vorteilhafterweise ein Grundträger 12 vorgesehen, dessen nach oben ragende Außenwandung 120 zur Aufnahme der Seitenwände 110', 110", 110'', 110'''' sowie der durch die Gehäuseteile 10, 11 nach unten fallende Asche ausgebildet.

Der mindestens eine Luftschacht 11 weist in einer besonders vorteilhaften Ausführungsform der Erfindung eine Zuluftregulierung auf.

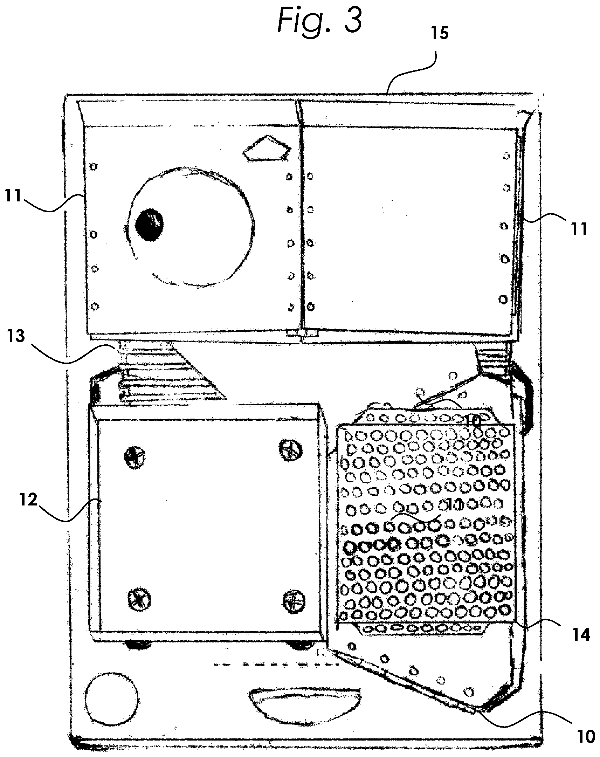

Weiterhin umfasst - wie aus Fig. 3 ersichtlich - der mobile Kohlegrill 1 vorzugsweise ein Transportbehältnis 15, in dem die zusammengeklappten Gehäuseteile 10, 11, das Grillrost 13, der Grundträger 12 und die Aufnahme 14 formschlüssig neben- oder übereinander angeordnet werden können.

Der erfindungsgemäße Kohlegrill beschränkt sich in seiner Ausführung nicht auf die vorstehend angegebenen bevorzugten Ausführungsformen. Vielmehr sind eine Vielzahl von Ausgestaltungsvariationen denkbar, welche von der dargestellten Lösung auch bei grundsätzlich anders gearteter Ausführung Gebrauch machen.

Liste der Bezugsziffern
- 1: Kohlegrill
- 10: Gehäuseteil / Glutkammer
- 11: Gehäuseteil / Luftschacht
- 12: Grundträger
- 13: Grillrost
- 14: Aufnahme
- 15: Transportbehältnis
- 100' bis 100"": Seitenwände der Glutkammer
- 110' bis 110"": Seitenwände des Luftschachts
- 1000: Seitenkanten an den Seitenwänden der Glutkammer
- 1001: oberer Bereich der Seitenwände der Glutkammer
- 1100: Seitenkanten an den Seitenwänden des Luftschachts
- 1200: Außenwandung am Grundträger

## Patentansprüche

1. Mobiler Kohlegrill (1), umfassend ein Grillgehäuse mit mindestens zwei reversibel zusammenfügbaren Gehäuseteilen (10, 11), welche sich zumindest aus einer Glutkammer (10) und mindestens einem Luftschacht (11) zusammensetzen und mindestens ein am oder oberhalb der Glutkammer (10) anordbarer Grillrost (13) sowie eine innerhalb der Glutkammer (10) anordbare Aufnahme (14) für Grillkohle vorgesehen sind,
**dadurch gekennzeichnet, dass**
die mindestens zwei Gehäuseteile (10, 11) aus form- und/oder kraftschlüssig sowie reversibel zusammenfügbaren Seitenwänden (100', 100'', 100''', 100''''; 110', 110'', 110''', 110'''') gebildet sind, wobei die Seitenwände (100', 100", 100''', 100"") und die Seitenwände (110', 110", 110''', 110'''') an ihren jeweiligen Seitenkanten (1000) und (1100) derart angelenkt und/oder reversibel aneinander angebracht sind, dass sie aus einer Stellung als Seitenwandsegment auf die jeweils angrenzende Seitenwand (100', 100", 100''', 100"") und (110', 110", 110''', 110'''') klappbar oder legbar und die Gehäuseteile (10, 11) somit zusammenklappbar oder zusammenlegbar sind, so dass sie jeweils eine kompakte Einheit für eine Lagerstellung und/oder einen Transport ergeben.

2. Mobiler Kohlegrill (1) nach Anspruch 1,
**dadurch gekennzeichnet, dass**
mindestens ein Gehäuseteil (10, 11) als Kubus ausgebildet ist.

3. Mobiler Kohlegrill (1) nach Anspruch 1 oder 2,
**dadurch gekennzeichnet, dass**
mindestens ein Gehäuseteil (10, 11) eine trichterförmige Geometrie aufweist.

4. Mobiler Kohlegrill (1) nach einem der vorangegangenen Ansprüche,
**dadurch gekennzeichnet, dass**
die Seitenwände (110', 110", 110''', 110"") in ihrem oberen Bereich (1001) zur einsteckbaren Aufnahme der Seitenwände (100', 100", 100''', 100"") ausgebildet sind.

5. Mobiler Kohlegrill (1) nach Anspruch 4,
**dadurch gekennzeichnet, dass**
die Seitenwände (110', 110", 110''', 110'''') zumindest in ihrem oberen Bereich (1001) zur Bildung einer trichterförmigen Aufnahme der Seitenwände (100', 100", 100''', 100"") abgewinkelt sind.

6. Mobiler Kohlegrill (1) nach einem der vorangegangenen Ansprüche,
**dadurch gekennzeichnet, dass**
ein Grundträger (12) vorgesehen ist, dessen nach oben ragende Außenwandung (120) zur Aufnahme der Seitenwände (110', 110'', 110''', 110'''') sowie der durch die Gehäuseteile (10, 11) nach unten fallenden Asche ausgebildet ist.

7. Mobiler Kohlegrill (1) nach einem der vorangegangenen Ansprüche,
**dadurch gekennzeichnet, dass**
der mindestens eine Luftschacht (11) eine Zuluftregulierung umfasst.

8. Mobiler Kohlegrill (1) nach einem der vorangegangenen Ansprüche,
**dadurch gekennzeichnet, dass**
der mobile Kohlegrill ein Transportbehältnis (15) umfasst, in dem die zusammengeklappten Gehäuseteile (10, 11), Grillrost (13), Grundträger (12) und Aufnahme (14) formschlüssig neben- oder übereinander angeordnet werden können.
